**Europäisches Patentamt**

**European Patent Office**

**Office européen des brevets**

(19)

(11) Veröffentlichungsnummer: **0 229 981**
**B1**

# (12) EUROPÄISCHE PATENTSCHRIFT

(45) Veröffentlichungstag der Patentschrift:
28.02.90

(21) Anmeldenummer: 86117248.4

(22) Anmeldetag: 11.12.86

(51) Int. Cl.⁴: **G01H 3/00**, G10K 11/26

(54) Verfahren zur Kontrolle der Eigenschaften des Fokus eines Ultraschallfeldes und Vorrichtung zur Durchführung des Verfahrens.

(30) Priorität: 20.12.85 DE 3545352

(43) Veröffentlichungstag der Anmeldung:
29.07.87 Patentblatt 87/31

(45) Bekanntmachung des Hinweises auf die Patenterteilung:
28.02.90 Patentblatt 90/9

(84) Benannte Vertragsstaaten:
DE FR GB NL

(56) Entgegenhaltungen:
EP-A- 0 133 665
EP-A- 0 133 946
DE-A- 3 220 751

(73) Patentinhaber: Siemens Aktiengesellschaft,
Wittelsbacherplatz 2, D-8000 München 2(DE)

(72) Erfinder: Granz, Bernd, Dr. Dipl.-Phys.,
Leonhardstrasse 6, D-8507 Oberasbach(DE)
Erfinder: Krämmer, Peter, Dr. Dipl.-Phys., Westl.
Stadtmauerstrasse 40, D-8520 Erlangen(DE)
Erfinder: Sachs, Bertram, Dorfstrasse 30,
D-8520 Erlangen(DE)

## Beschreibung

Die Erfindung bezieht sich auf ein Verfahren zur Kontrolle der Eigenschaften des Fokus eines fokussierten Ultraschallfeldes und eine Vorrichtung zur Durchführung des Verfahrens.

Fokussierte Ultraschallfelder werden beispielsweise in der Medizin eingesetzt, um im Körper befindliche Konkremente, wie z.B. Nierensteine, zu zerstören. Der Vorteil eines derartigen Verfahrens besteht darin, daß operative Eingriffe oder das Einführen von Sonden in den Körper des Patienten und die damit verbundene Gefährdung durch Infektionen vermieden werden.

Aus der EP-A2 0 133 665 ist eine Einrichtung zum berührungslosen Zertrümmern eines Konkrements bekannt, bei dem die in einem Stoßwellenrohr erzeugte, annähernd ebene Ultraschallwelle mittels einer akustischen Linse oder eines akustischen Linsensystems auf das Zielgebiet fokussiert wird. Zwischen der Linse bzw. dem Linsensystem und einer als Ultraschall-Sender dienenden Kupfer-Membran befindet sich ein Koppelmedium. Durch eine Halterung kann das Stoßwellenrohr auf das Konkrement so ausgerichtet werden, daß der bildseitige Brennpunkt der Linse im Konkrement liegt. Die Linse kann außerdem zur genauen Justierung der Lage des Brennpunktes mit Hilfe einer Feinregulierung längs der Achse des Stoßwellenrohres verschoben werden.

Ein Nachteil der genannten Einrichtung besteht nun darin, daß Veränderungen der Eigenschaften des Fokus, wie beispielsweise eine Veränderung seiner Lage oder eine Änderung seiner lateralen und axialen Ausdehnung, während der Anwendung der Einrichtung nicht erfaßt werden können. Zur Bestimmung der Eigenschaften des Fokus muß nämlich das Gerät vom Patienten entfernt und in einer geeigneten Vorrichtung überprüft werden. Solche Veränderungen der Eigenschaften des Fokus können beispielsweise durch eine Änderung des vom Ultraschall-Sender abgestrahlten Wellenfeldes oder durch eine mechanische Dejustierung des Abbildungssystems entstehen.

Der Erfindung liegt nun die Aufgabe zugrunde, ein Verfahren anzugeben, das die Bestimmung der Eigenschaften des Fokus eines in einem Objekt fokussierten Ultraschallfeldes auch während der Beschallung des Objektes ermöglicht.

Diese Aufgabe wird erfindungsgemäß gelöst mit den Merkmalen des Anspruchs 1. Die räumliche und zeitliche Schalldruckverteilung in einer Schnittfläche durch den Strahlengang ist bei Kenntnis der akustischen und geometrischen Eigenschaften der sich im weiteren Strahlengang befindenden Medien mit den Eigenschaften des Fokus, d.h. seiner Lage und seinen lateralen und axialen Abmessungen mathematisch verknüpft. Insbesondere kann diese Schnittfläche, die im allgemeinen auch gekrümmt sein kann, auch innerhalb oder auf den abbildenden Flächen der Abbildungsvorrichtung liegen. Je größer die zeitliche und räumliche Auflösung ist, mit der die Schalldruckverteilung in der Schnittfläche bekannt ist, desto genauer lassen sich die Eigenschaften des Fokus rekonstruieren. Zur Kontrolle der Lage des Fokus werden die an vorgegebenen Orten im Strahlengang ermittelten Meßwerte mit den bei einer Kalibriermessung ermittelten Sollwerten, für welche die Lage der Fokus bekannt ist, verglichen. Liegen die gemessenen Werte außerhalb eines tolerierbaren Sollwertbereiches, so ist dies ein Hinweis dafür, daß sich die Eigenschaften des Schallfeldes geändert haben und daß eine unzulässige Veränderung der Fokuslage eingetreten ist.

Durch das genannte Verfahren wird somit eine Änderung der Eigenschaften des Fokus während der Beschallung des Objektes erkannt. Bei Anwendung des Verfahrens beispielsweise während des Betriebs eines Nierensteinzertrümmerers wird die Gefahr der Schädigung der das Konkrement umgebenen gesunden Niere verringert.

In einer geeigneten Vorrichtung zur Durchführung des Verfahrens werden in einer Schnittfläche des Strahlengangs Ultraschall-Empfänger angeordnet. Die Ultraschall-Empfänger bestehen vorzugsweise aus piezoelektrischen Polymerfolien, die mit metallischen Elektroden und Anschlußleitern versehen sind.

Die aus piezoelektrischen Polymerfolien bestehenden Ultraschall-Empfänger sind in vorteilhafter Weise auf einer im Strahlengang der Ultraschallwelle befindlichen Oberfläche der Abbildungsvorrichtung angeordnet.

Diese Ultraschall-Empfänger können entweder als einzelne voneinander räumlich getrennte Folien vorliegen oder durch eine zusammenhängende Polymerfolie gebildet werden, die beispielsweise mit einer matrixförmigen Elektrodenanordnung versehen ist, bei denen eine Elektrode jeweils mit einem Anschlußleiter verbunden ist.

In einer besonders vorteilhaften Ausführungsform ist auf der dem Fokus zugewandten Oberfläche der Abbildungsvorrichtung eine piezoelektrische Polymerfolie angeordnet, die mit wenigstens einer ringförmigen Außenelektrode und mit einer kreisscheibenförmigen Mitteleketrode versehen ist. Durch die rotationssymmetrische Gestalt der Empfängerfläche ist gewährleistet, daß wenigstens annähernd phasengleiche Bereiche des fokussierten Ultraschallfeldes von einem einzigen Empfangselement erfaßt werden und die Anzahl der auszulesenden Empfangselemente ist bei vorgegebener Gesamtempfangsfläche verringert.

In einer weiteren vorteilhaften Anordnung wird eine akustische Linse durch eine piezoelektrische Polymerfolie, die ebenfalls mit einer matrixförmigen Elektrodenanordnung versehen ist, in zwei Teile getrennt.

In einer vereinfachten Ausführungsform wird das Schallfeld am Ort der Abbildungsvorrichtung nur an wenigen vorgegebenen Punkten überwacht wird. Dazu werden in einer vorteilhaften Anordnung die Elemente der Abbildungsvorrichtung mit Bohrungen versehen, in die die Ultraschall-Empfänger eingesetzt werden. Bringt man bei Verwendung einer Linse die Bohrungen im Randbereich der Linse unter, so können auch piezokeramische Ultraschall-Empfänger verwendet werden.

Zur weiteren Erläuterung der Erfindung wird auf die Zeichnung Bezug genommen, in deren

Figuren 1, 2, 3 und 4 das Prinzip des Verfahrens gemäß der Erfindung erläutert ist.

Figuren 5 und 6 zeigen jeweils vorteilhafte Anordnungen zur Durchführung des Verfahrens im Schnitt.

Figuren 7 und 8 zeigen eine Anordnung im Schnitt bzw. in einer Draufsicht, bei der die dem Fokus zugewandte Oberfläche der Abbildungsvorrichtung mit ringförmigen Ultraschall-Empfängern versehen ist. In

Figuren 9 und 10 ist eine besonders vorteilhafte Gestaltung einer akustischen Linse mit einer Ultraschall-Empfangsmatrix im Schnitt bzw. in einer Draufsicht dargestellt. Gemäß

Figuren 11 und 12 sind Ultraschall-Empfänger in ein mit Bohrungen versehenes abbildendes Element eingesetzt.

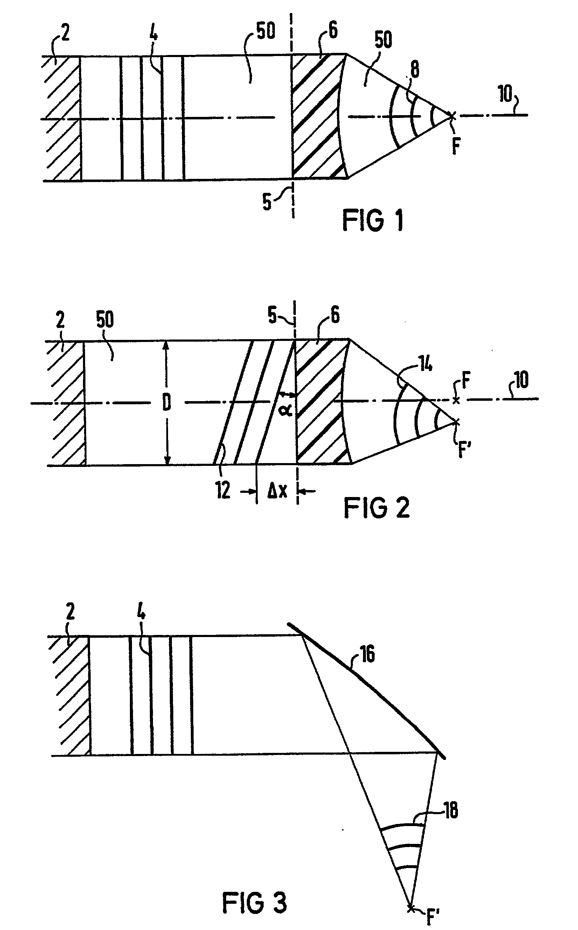

Gemäß Figur 1 fällt ein von einem Ultraschall-Sender 2 erzeugtes, beispielsweise ebenes Ultraschall-Wellenfeld 4 auf eine als Abbildungsvorrichtung dienende akustische Linse 6. Die akustische Linse 6 wandelt das ebene Wellenfeld 4 in ein transmittiertes kugelförmiges Wellenfeld 8 um, dessen Radiusmittelpunkt bei idealen Abbildungsbedingungen mit dem auf der Linsenachse 10 liegenden bildseitigen Brennpunkt F der akustischen Linse 6 zusammenfällt. Als akustische Linse 6 ist beispielsweise eine plankonkave Linse 6 dargestellt, die dann als Sammellinse wirkt, wenn die Schallgeschwindigkeit in der Linse größer ist als die Schallgeschwindigkeit in einem die Linse umgebenden schalltragenden Medium 50. Dies ist der Fall, wenn die Linse 6 beispielsweise aus einem Polymer, vorzugsweise Polymethacrylsäuremethylester PMMA oder Polystyrol PS und das sie umgebende Medium 50 beispielsweise aus Wasser besteht. In einer Schnittfläche 5 des Strahlengangs des ebenen Wellenfeldes 4, die beispielsweise mit der ebenen Fläche der plankonkaven Linse 6 zusammenfällt und die beispielsweise senkrecht zu dessen Ausbreitungsrichtung liegt, ist die räumliche Verteilung des Schalldruckes homogen und die an verschiedenen Meßorten in der Schnittfläche 5 ermittelten Meßsignale sind phasengleich.

In Figur 2 sind die Abbildungsverhältnisse für den Fall dargestellt, in dem eine beispielsweise ebene Ultraschallwelle 12 auf die akustische Linse 6 fällt, deren Wellennormalen nicht parallel zur Linsenachse 10 sind. Im Bildraum entsteht ein kugelförmiges akustisches Wellenfeld 14, dessen Radiusmittelpunkt der bildseitige Fokus F′ der auf die akustische Linse 6 auftreffenden Ultraschallwelle 12 ist. Der bildseitige Fokus F′ liegt außerhalb der Linsenachse 10 und fällt somit nicht mehr mit dem bildseitigen Brennpunkt F der akustischen Linse 6 zusammen. Die in der Schnittfläche 5 ermittelten Meßsignale sind nicht mehr phasengleich, da die Flächen gleicher Phase gegen die Schnittfläche 5 um einen Winkel $\alpha$ geneigt sind. Die in der Schnittfläche 5 im Strahlengang des ebenen Wellenfeldes 12 ermittelten Meßsignale sind gegeneinander zeitlich verzögert. Die maximale zeitliche Verzögerung $\Delta t_{max}$ zwischen zwei Meßsignalen beträgt dann $\Delta x/c$, wobei c die Schallgeschwindigkeit im schalltragenden Medium 50 ist und $\Delta x$ sich aus der Apertur D des ebenen Wellenfeldes 12 durch die Beziehung $\Delta x = D \cdot \tan\alpha$ ergibt. Wird eine derartige zeitliche Verzögerung der an verschiedenen Orten innerhalb der Schnittfläche 5 ermittelten Meßsignale festgestellt, dann kann daraus gefolgert werden, daß der bildseitige Fokus F′ mit dem bildseitigen Brennpunkt nicht mehr zusammenfällt. Im Beispiel gemäß Figur 2 kann bei gegebenen Linseneigenschaften der bildseitige Fokus F′ aus der maximalen zeitlichen Verzögerung $\Delta t_{max}$ ermittelt werden.

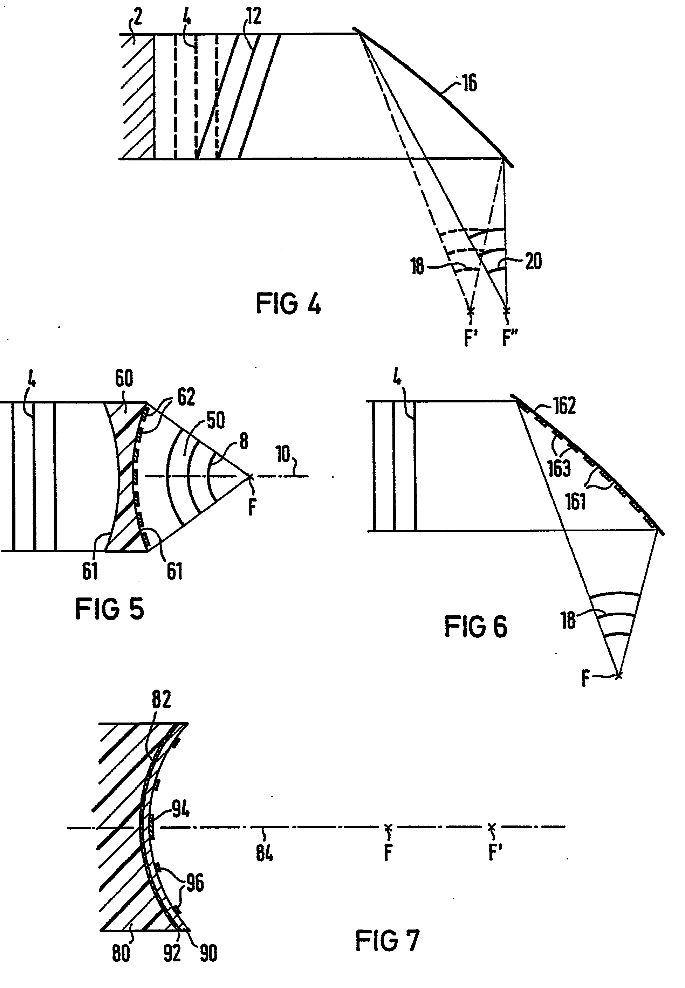

Zur Fokussierung eines Ultraschallfeldes kann auch ein beispielsweise metallischer Hohlspiegel verwendet werden. In Figuren 3 und 4 sind die Abbildungsverhältnisse für zwei auf einen Hohlspiegel 16 auftreffende ebene Wellenfelder 4 und 12 dargestellt. Entsprechend der Richtung ihrer jeweiligen Wellennormalen entstehen kugelförmige Wellenfelder 18 bzw. 20, deren Foki F′ bzw. F″ an verschiedenen Orten im Bildraum liegen.

Sind die räumliche und zeitliche Schalldruckverteilung in einer Schnittfläche des Strahlenganges und die geometrischen und akustischen Eigenschaften des im Gebiet zwischen dieser Schnittfläche und dem Fokus befindlichen Mediums bekannt, so können daraus die Eigenschaften des Fokus rekonstruiert werden, da dann die zwischen der Schalldruckverteilung in der vorgegebenen Schnittfläche und den Eigenschaften des Fokus bestehenden mathematischen Beziehungen bekannt sind. Dies gilt auch dann, wenn die auf die akustische Abbildungsvorrichtung einfallenden Ultraschallwellen im Gegensatz zu den anhand der Figuren 1 bis 5 erläuterten Beispielen nicht eben sind und beispielsweise von einer punktförmigen Ultraschallquelle ausgehen. Liegt beispielsweise die Schnittfläche in einem Gebiet, in dem die auf die Abbildungsvorrichtung 6 bzw. 16 einfallende Ultraschallwelle, beispielsweise ebene Wellen 4 oder 12, gemessen wird, so müssen bei der Rekonstruktion der Eigenschaften des Fokus die Eigenschaften der Abbildungsvorrichtung bekannt sein.

Wird nur an wenigen vorgegebenen Orten in der Schnittfläche der zeitliche Verlauf des Schalldruckes gemessen, so lassen sich die Eigenschaften des Fokus nicht mehr exakt rekonstruieren. Die an diesen Orten ermittelten Meßwerte für die Schalldruckamplitude können jedoch mit den entsprechenden Sollwerten, für die die Lage des Fokus bekannt ist, verglichen werden und erlauben somit eine Kontrolle der Fokuseigenschaften. Stimmen die Meßwerte mit den Sollwerten innerhalb vorgegebener Grenzen nicht überein, so kann daraus gefolgert werden, daß sich die Eigenschaften des Schallfeldes und somit auch die Eigenschaften des Fokus in unzulässiger Weise verändert haben.

Gemäß Figur 5 ist eine akustische Linse 60 auf einer ihrer abbildenden Oberflächen 61 mit mehreren piezoelektrischen Wandlern 62 versehen, die beispielsweise matrixförmig auf ihr angeordnet sein können. Die akustische Linse 60 besteht vorzugsweise aus einem Kunststoff, insbesondere aus Polystyrol PS. Die piezoelektrischen Wandler 62 bestehen vorzugsweise aus einem piezoelektrischen Polymer beispielsweise polarisiertem Polyvinylchlorid PVC, insbesondere aus polarisiertem Polyvinylidenfluorid PVDF, das mit dünnen metallischen Elektroden versehen ist. Dies hat den Vorteil, daß die akustische Impedanz der piezoelektrischen Wandler 62 der akustischen Impedanz des schalltragenden Mediums 50 und der akustischen Impedanz der Linse weitgehend angepaßt ist. Dadurch werden die an den zusätzlichen Grenzflächen zwischen Linse 60 und Ultraschallwandler 62 sowie zwischen Ultraschallwandler 62 und schalltragendem Medium 50 in vorteilhafter Weise verringert. Außerdem kann eine Polymerfolie wegen ihrer hohen Verformbarkeit auf die gekrümmte Linsenoberfläche leicht aufgebracht werden.

Bei der in Figur 6 dargestellten Vorrichtung ist die reflektierende Oberfläche 161 eines Hohlspiegels 162 mit piezoelektrischen Wandlern 163 versehen. Auch in diesem Fall ist es wegen der gekrümmten Oberfläche 161 des Hohlspiegels 162 von Vorteil, wenn die piezoelektrischen Wandler 163 aus einer mit Elektroden versehenen piezoelektrischenn Polymerfolie bestehen.

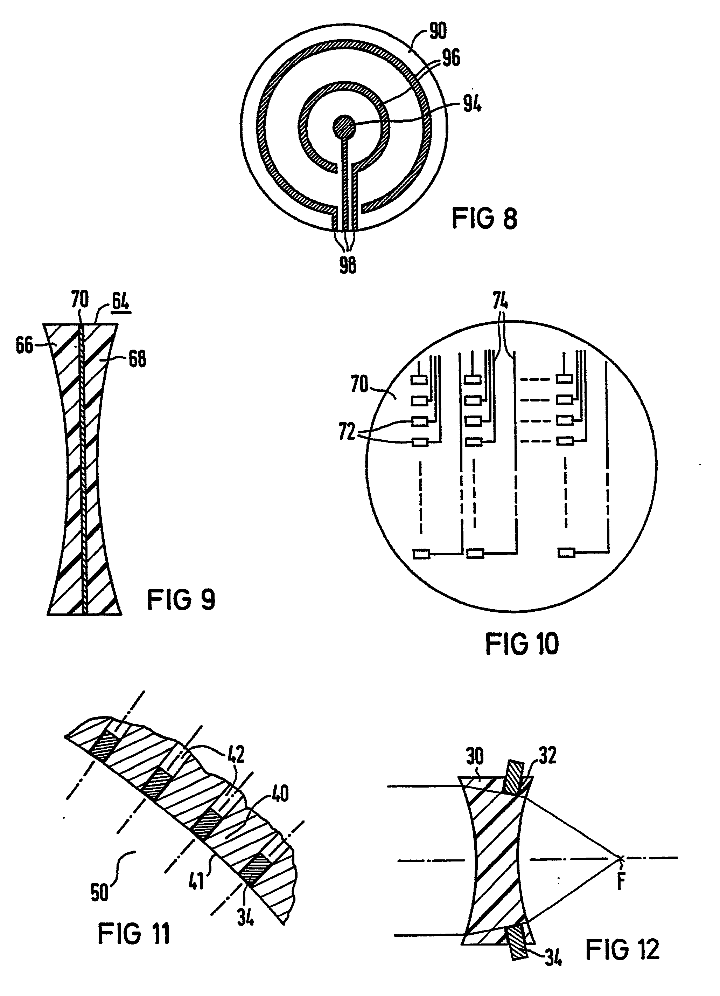

Gemäß Figur 7 ist eine Linse 80 an ihrer dem bildseitigen Brennpunkt F zugewandten Oberfläche 82 mit einer piezoelektrischen Polymerfolie 90 versehen. Die piezoelektrische Polymerfolie 90 ist an ihrer der Linse 80 zugewandten Flachseite mit einer zusammenhängenden elektrisch leitfähigen, beispielsweise metallischen Schicht 92 versehen. Auf ihrer dem bildseitigen Brennpunkt F zugewandten Flachseite ist die piezoelektrische Polymerfolie mit Elektroden 94 und 96 versehen. Entsprechend Figur 8 sind mehrere ringförmige Außenelektroden 96 um eine Mittelelektrode 94 voneinander elektrisch getrennt angeordnet. Von den Elektroden 96 und 94 führen Anschlußleiter 98 bis zum Rand der Folie. Die Elektroden 94 und 96 haben bis auf den von den Anschlußleitern 98 gebildeten Bereich eine um die Linsenachse 84 rotationssymmetrische Gestalt. Die Elektroden 94 und 96 sind in ihrer Form dem Krümmungsradius der Oberfläche 82 angepaßt. Bei einer konkaven Oberfläche 82 hat die Mittelelektrode 94 eine kalottenförmige Gestalt. Ist die Oberfläche 82 plan, so ist die Mittelelektrode 94 in Form einer Kreisscheibe ausgebildet. Wenn der Durchmesser der Mittelelektrode 94 und die Breite der Außenelektroden 96 ausreichend klein gewählt werden, so ist wegen der rotationssymmetrischen Anordnung der Elektroden 96 und 94 gewährleistet, daß jede Elektrode 96 bzw. 94 die im bildseitigen Brennpunkt F gebündelte Kugelwelle an Orten annähernd gleicher Phase schneidet. Zwischen den an den einzelnen Elektroden entstehenden Meßsignalen besteht dann in diesem Fall eine feste Phasendifferenz, die sich aus den unterschiedlichen Laufstrecken der kugelförmigen Ultraschallwelle zum bildseitigen Brennpunkt F und der Schallgeschwindigkeit ergibt. Dabei ist zu beachten, daß der Krümmungsradius der Linse 80 im allgemeinen nicht mit dem Krümmungsradius der Kugelwelle am Ort der Linsenoberfläche 82 identisch ist. Eine Verlagerung des bildseitigen Fokus der Ultraschallwelle kann dann dadurch erkannt werden, daß die bei Fokussierung im Brennpunkt F sich ergebenden Phasenbeziehungen zwischen den einzelnen Signalen nicht mehr erfüllt sind. Eine laterale Verschiebung des bildseitigen Fokus beispielsweise zum Punkt F' auf der Linsenachse 84 macht sich dann in einer Verringerung der Phasendifferenz zwischen den an den einzelnen Elektroden 94 und 96 gemessenen elektrischen Signalen. In diesem Fall kann dann aus der gemessenen Phasendifferenz die Lage des Fokus F' errechnet werden.

In Figur 9 wird eine Linse 64 durch eine einzige piezoelektrische Polymerfolie 70 in zwei Teile 66 und 68 aufgeteilt. Gemäß Figur 10 ist die piezoelektrische Polymerfolie 70 auf einer Flachseite mit einer beispielsweise matrixförmigen Anordnung von Elektroden 72 versehen, von denen Anschlußleiter 74 zum Rand der Folie 70 führen.

In Figur 11 ist ein Hohlspiegel 40 mit Bohrungen 42 versehen, die senkrecht zu seiner Oberfläche 41 verlaufen. In die Bohrungen 42 sind Ultraschall-Empfänger 34 eingesetzt. Die Ultraschall-Empfänger 34 bestehen vorzugsweise aus einem Material mit hoher akustischer Impedanz, beispielsweise aus einem piezokeramischen Werkstoff, um die Transmissionsverluste an der Grenzfläche zum schalltragenden Medium 50 möglichst gering zu halten.

Entsprechend Figur 12 ist eine Linse 30 am Linsenrand mit Bohrungen 32 versehen, in die die Ultraschall-Empfänger 34 eingesetzt werden. Eine derartige vereinfachte Ausführungsform ist besonders für einfache Kontrollmessungen geeignet, bei denen nur überwacht werden soll, ob beispielsweise die Lage des Fokus mit der durch vorhergehende Kalibrierung ermittelten Lage noch übereinstimmt. Für eine genaue Bestimmung der Eigenschaften des Fokus ist eine derartige Vorrichtung weniger geeignet, da eine Veränderung des Ultraschallfeldes nur im Randbereich einer Querschnittsfläche durch den Strahlengang festgestellt wird. Da eine Beeinflussung des Ultraschallfeldes durch den Ultraschallempfänger 34 nur im Randbereich erfolgt, können auch piezokeramische Ultraschall-Empfänger 34 mit hoher akustischer Impedanz verwendet werden.

## Patentansprüche

1. Verfahren zur Kontrolle der Eigenschaften des Fokus eines Ultraschallfeldes, das mit einer Abbildungsvorrichtung fokussiert wird, mit folgenden Merkmalen:

a) Das Ultraschallfeld wird in einer Schnittfläche des Strahlenganges an mehreren Orten gemessen,

b) die Schnittfläche befindet sich an einer abbildenden Oberfläche oder innerhalb der Abbildungsvorrichtung (6).

c) die Meßwerte werden mit vorgegebenen Sollwerten verglichen.

2. Vorrichtung zur Durchführung des Verfahrens zur Kontrolle der Eigenschaften des Fokus eines mit einer Abbildungsvorrichtung fokussierten Ultraschallfeldes nach Anspruch 1 mit folgenden Merkmalen:

a) Wenigstens ein Element der Abbildungsvorrichtung ist mit piezoelektrischen Wandlern versehen,

b) als piezoelektrische Wandler sind piezoelektrische Polymerfolien vorgesehen.

3. Vorrichtung nach Anspruch 2, die piezoelektrische Polymerfolien enthält, die auf einer im Strahlengang befindlichen Oberfläche (61) eines Elementes (60) der Abbildungsvorrichtung angeordnet sind.

4. Vorrichtung nach Anspruch 2 oder 3 mit folgenden Merkmalen:

a) In der Querschnittsfläche des Strahlenganges ist eine einzige piezoelektrische Polymerfolie (70) angeordnet,

b) die piezoelektrische Polymerfolie (70) ist mit einer matrixförmigen Anordnung von Elektroden (72) versehen

c) einer der Elektroden (72) ist jeweils ein Anschlußleiter (74) zugeordnet, der zum Rand der Polymerfolie (70) führt.

5. Vorrichtung nach Anspruch 4 mit folgenden Merkmalen:

a) Als Abbildungsvorrichtung ist eine akustische Linse (64) vorgesehen,

b) die akustische Linse (64) wird durch die piezoelektrische Polymerfolie (70) in zwei Teile (66 und 68) getrennt.

6. Vorrichtung nach Anspruch 3 mit folgenden Merkmalen:

a) Als Abbildungsvorrichtung ist eine akustische Linse (80) vorgesehen,

b) auf der dem Brennpunkt F zugewandten Oberfläche (82) ist eine piezoelektrische Polymerfolie (90) angeordnet,

c) die piezoelektrische Polymerfolie (90) ist mit einer der Krümmung der Oberfläche (82) der Linse (80) angepaßten Mittelelektrode (96) und mit konzentrisch um die Mittelelektrode (94) angeordneten ringförmigen Außenelektroden (96) versehen,

d) die Elektroden (94, 96) sind jeweils mit Anschlußleitern (98) versehen, die zum Rand der Polymerfolie (90) führen,

e) die Elektroden (94, 96) sind mit Ausnahme des von den Anschlußleitern (98) gebildeten Bereiches rotationssymmetrisch um die Linsenachse (84) angeordnet.

7. Vorrichtung zur Durchführung des Verfahrens zur Kontrolle der Eigenschaften des Fokus eines mit einer Abbildungsvorrichtung fokussierten Ultraschallfeldes nach Anspruch 1 mit folgenden Merkmalen:

a) Wenigstens ein Element (30, 40) der Abbildungsvorrichtung ist an vorbestimmten Stellen mit Bohrungen (32 bzw. 42) versehen,

b) in den Bohrungen (32 bzw. 42) sind Ultraschall-Empfänger (34) angeordnet.

## Revendications

1. Procédé pour contrôler les propriétés du foyer d'un champ ultrasonore qui est focalisé avec un dispositif de formation d'images, comportant les caractéristiques suivantes:

a) le champ ultrasonore est mesuré en plusieurs emplacements dans une surface de coupe de la trajectoire des rayons,

b) la surface de coupe se situe au niveau d'une surface de production d'images ou à l'intérieur d'un dispositif de formation d'images (6),

c) les valeurs de mesure sont comparées avec des valeurs de consigne prédéterminées.

2. Dispositif pour la mise en œuvre du procédé pour contrôler les propriétés du foyer d'un champ ultrasonore focalisé à l'aide d'un dispositif de formation d'images, selon la revendication 1, présentant les caractéristiques suivantes:

a) au moins un élément du dispositif de formation d'images est pourvu de transducteurs piézoélectriques,

b) des feuilles polymères piézoélectriques sont prévues en tant que transducteurs piézoélectriques.

3. Dispositif selon la revendication 2, comportant des feuilles polymères piézoélectriques qui sont disposées sur une surface (61), située dans la trajectoire des rayons, d'un élément (60) du dispositif de formation d'images.

4. Dispositif selon la revendication 2 ou 3, comportant les caractéristiques suivantes:

a) dans la surface de la section transversale de la trajectoire des rayons, est disposée une seule feuille polymère piézoélectrique (70),

b) la feuille polymère piézoélectrique (70) est pourvue d'un agencement d'électrodes (72), en forme de matrice,

c) l'une des électrodes (72) est associée à un conducteur de raccordement (74) qui mène au bord de la feuille polymère (70).

5. Dispositif selon la revendication 4 comportant les caractéristiques suivantes:

a) il est prévu une lentille acoustique (64) en tant que dispositif de formation d'images,

b) la lentille acoustique (64) est séparée en deux parties (66 et 68) par la feuille polymère piézoélectrique (70).

6. Dispositif selon la revendication 3, comportant les caractéristiques suivantes:

a) il est prévu une lentille acoustique (80) en tant que dispositif de formation d'images,

b) sur la surface (82) qui est voisine du foyer (F), est disposée une feuille polymère piézoélectrique (90),

c) la feuille polymère piézoélectrique (90) est pourvue d'une électrode médiane (94) qui est adaptée à la courbure de la surface (82) de la lentille (80), ainsi que d'électrodes de forme annulaire (96), qui sont disposées concentriquement autour de l'électrode médiane (94),

d) les électrodes (94, 96) sont respectivement pourvues de conducteurs de branchement, qui mènent vers le bord de la feuille polymère (90),

e) les électrodes (94, 96) sont, à l'exception de la zone qui est formée par les conducteurs de branchement (98), disposées avec une symétrie de rotation autour de l'axe (84) de la lentille.

7. Dispositif pour la mise en œuvre du procédé pour contrôler les propriétés du foyer d'un champ ultrasonore qui est focalisé à l'aide d'un dispositif de formation d'images, selon la revendication 1, comportant les caractéristiques suivantes:

a) au moins un élément (30, 40) du dispositif de formation d'images, est pourvu de perçages (33, 42) ménagés en des emplacements prédéterminés,

b) dans les perçages (32, 42) sont disposés des récepteurs d'ultra-sons.

## Claims

1. Method for checking the characteristics of the focus of an ultrasonic field focused with an imaging apparatus, having the following features:

    a) the ultrasonic field is measured in a sectional area of the beam path at several points;

    b) the sectional area is located on an imaging surface or inside the imaging apparatus (6);

    c) the measured values are compared with specified desired values.

2. Apparatus for carrying out the method for checking the characteristics of the focus of an ultrasonic field focused with an imaging apparatus according to claim 1, having the following features:

    a) at least one element of the imaging apparatus is provided with piezoelectric transducers;

    b) piezoelectric polymer foils are provided as piezoelectric transducers.

3. Apparatus according to claim 2 containing piezoelectric polymer foils which are arranged on a surface (61) of an element (60) of the imaging apparatus, which surface is located in the beam path.

4. Apparatus according to claim 2 or 3 having the following features:

    a) in the cross-sectional area of the beam path there is arranged a single piezoelectric polymer foil (70);

    b) the piezoelectric polymer foil (70) is provided with a matrix-type arrangement of electrodes (72);

    c) assigned to each of the electrodes (72) there is a supply lead (74) which leads to the periphery of the polymer foil (70).

5. Apparatus according to claim 4 having the following features:

    a) an acoustic lens (64) is provided as the imaging apparatus;

    b) the acoustic lens (64) is separated into two parts (66 and 68) by the piezoelectric polymer foil (70).

6. Apparatus according to claim 3 having the following features:

    a) an acoustic lens (80) is provided as the imaging apparatus;

    b) on the surface (82) facing the focal point F there is arranged a piezoelectric polymer foil (90);

    c) the piezoelectric polymer foil (90) is provided with a middle electrode (96) matched to the curvature of the surface (82) of the lens (80) and with ring-shaped outer electrodes (96) arranged concentrically around the middle electrode (94);

    d) the electrodes (94, 96) are each provided with supply leads (98) which lead to the periphery of the polymer foil (90);

    e) the electrodes (94, 96) are arranged, with the exception of the region formed by the supply leads (98), rotationally symmetrically around the axis of the lens (84).

7. Apparatus for carrying out the method for checking the characteristics of the focus of an ultrasonic field focused with an imaging apparatus according to claim 1, having the following features:

    a) at least one element (30, 40) of the imaging apparatus is provided with holes (32 and 42 respectively) at predetermined points;

    b) in the holes (32 and 42 respectively) there are arranged ultrasonic receivers (34).

FIG 1

FIG 2

FIG 3

FIG 4

FIG 5

FIG 6

FIG 7

FIG 8

FIG 9

FIG 10

FIG 11

FIG 12